# EUROPEAN PATENT SPECIFICATION

(11) **EP 3 346 734 B1**
(45) Date of publication and mention of the grant of the patent: **02.12.2020**
(21) Application number: 17150676.9
(22) Date of filing: 09.01.2017
(51) Int. Cl.: H04W 4/06, H04W 12/04

(54) **PROVIDING INFORMATION TO A MOBILE DEVICE OPERATED IN A MOBILE RADIO NETWORK VIA A BROADCAST CHANNEL**
BEREITSTELLUNG VON INFORMATION UBER EIN BROADCASTKANAL AN EINE MOBILE VORRICHTUNG, DIE IN EINEM MOBILFUNKNETZ BETRIEBEN WIRD
FOURNITURE D'INFORMATIONS VIA UN CANAL DE DIFUSION À UN DISPOSITIF MOBILE FONCTIONNANT DANS UN RÉSEAU RADIO MOBILE

(43) Date of publication of application: 11.07.2018
(73) Proprietor: Vodafone GmbH, 40549 Düsseldorf (DE)
(72) Inventor: KULAKOV, Alexej, 40595 Düsseldorf (DE); BÖSINGER, Michael, 41352 Korschenbroich (DE)
(74) Representative: Weisbrodt, Bernd

(56) References cited:
- US-A1- 2015 119 023
- US-A1- 2015 319 172
- Muhammad Moiz Anis ET AL: "Overview of evolved Multimedia Broadcast Multicast Services (eMBMS)", , 26 March 2016 (2016-03-26), page 48, XP055373253, Retrieved from the Internet: URL:https://hal.archives-ouvertes.fr/hal-0 1291201/file/TB_Rapport_EMBMSformatTB.pdf [retrieved on 2017-05-15]
- LUCENT TECHNOLOGIES: "MBMS key update procedure", 3GPP DRAFT; R2-022112_MBMS_SECURITY, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Stockholm, Sweden; 20020817, 17 August 2002 (2002-08-17), XP050121636, [retrieved on 2002-08-17]

## Description

The present invention relates to a method for providing information to a mobile device operated in a mobile radio network forming a service area having a cellular network structure composed of radio cells.

The present invention further relates to a communication system for providing information to a mobile device operated in a mobile radio network forming a service area having a cellular network structure composed of radio cells. The communication system according to the present invention comprises a mobile radio network forming a service area having a cellular network structure composed of radio cells and at least one mobile device operated in the mobile radio network.

The present invention further relates to a mobile radio network forming a service area having a cellular network structure composed of radio cells which for providing information to a mobile device operated in the mobile radio network is designed and/or adapted to execute the method steps of the mobile radio network of a method according to the present invention. The mobile radio network in particular is a mobile radio network according to 4G standard according to 3GPP. The mobile radio network especially comprises entities such as data bases, for instance HLR (HLR: Home Location Register), HSS (HSS: Home Subscriber Server), VLR (VLR: Visitor Location Register), EIR (EIR: Equipment Identity Register) as well as service entities such as MSC (MSC: Mobile Switching Centre), MME (MME: Mobility Management Entity), SGW (SGW: Serving Gateway), PDN (PDN: Packet Data Networks), PGW (PGW: PDN (PDN: Packet Data Networks) Gateway), PCRF (PCRF: Policy and Charging Rules Function) and/or the like entities.

The present invention further relates to a mobile device operated respectively operate-able in a mobile radio network forming a service area having a cellular network structure composed of radio cells which for providing information from the mobile radio network to the mobile device is designed and/or adapted to execute the method steps of the mobile device of a method according to the present invention. The mobile device can be a mobile phone, smart phone, tablet or any other mobile communication device capable of connecting to the mobile radio network. In the following, the mobile device may be further referred to as user equipment, so called UE.

In the state of the art various solutions for providing information to a mobile device operated in a mobile radio network are known. Such information comprise for example information items for reproduction and/or usage by the mobile device, for example messages and/or location information, which are used respectively usable by the mobile device for further services and/or applications operated on side of the mobile device.

The publication "Overview of evolved Multimedia Broadcast Multicast Services (eMBMS)" (Muhammad Moiz Anis et al.) provides an overview of rules, procedures and architecture supporting MBMS based data exchanges.

US 2015/0319172 A1 relates to a security solution for group authentication in Machine-Type Communication (MTC) which provides an efficient way for a network to perform mutual authentication with all the group MTC UEs.

The publication "MBMS key update procedure" (3GPP document R2-022112) by Lucent Technologies describes how a MBMS user could obtain a new key when it changes cell assuming RLC/MAC layer encryption is done.

There is a need to provide information to a mobile device operated in a mobile radio network, depending on the subscription and/or the access rights the user of a mobile has within the mobile radio network, especially to offer special services and/or special charging of services to the user. Since the amount of information to be handled, maintained and/or provided within and/or via the mobile radio network is or might be tremendous, with that there is further a need to reduce the efforts on side of the mobile radio networks and to optimize the usage of the resources of the mobile radio network. On side of the mobile devices there is also a need to optimize the usage of the resources of the mobile device itself, especially to be able to save battery capacities.

As a technical solution the present invention proposes a method for providing information to a mobile device operated in a mobile radio network forming a service area having a cellular network structure composed of radio cells, whereby
an information item to be provided to the mobile device for reproduction and/or usage by the mobile device for a further service and/or an application operated on side of the mobile device is encoded with a key on side of the mobile radio network,
the encoded information item is transmitted from the mobile radio network to the mobile device via a broadcast channel used within at least one radio cell of the mobile radio network,
the information item received by the mobile device from the radio cell of the mobile radio network via the broadcast channel is decoded on side of the mobile device by using the key,
characterized in that
the key is provided to the mobile device from the mobile radio network when the mobile device connects a radio cell of the mobile radio network for the first time, wherein the information item is or comprises positioning technology assistance information, and
wherein the mobile radio network is a mobile radio network according to 4G standard respectively LTE standard and the information item is broadcasted to the mobile device via a SIB Message.

According to the present invention an information item is provided to the mobile devices via a broadcast channel used within at least one radio cell of the mobile radio network. The information item is encoded with a specific key on side of the mobile radio network. According to the present invention only devices which have the specific key can and will access to secured broadcasted information item by encoding this with the specific key. Without the specific key, a mobile device can and will not react on such broadcasted information. Thus the mobile device is able to save battery capacities. On side of the mobile radio network using a broadcasting channel for providing information to mobile devices saves resources, especially within the core network, but at the same time ensures that as much as possible authorized users are reached. The mobile device gets the specific key from the mobile radio network when it connects a radio cell of the mobile radio network for the first time or during a handover from one radio cell of the mobile radio network to another radio cell of the mobile radio network.

In a further embodiment of the present invention the specific key is advantageously provided to the mobile device from the mobile radio network during attach procedure. This allows the user to decode the secured system information within a geographical area.

In a further embodiment of the present invention the specific key provided to the mobile device from the mobile radio network advantageously depends on the subscription the user of the mobile device has with the mobile radio network.

According to further embodiment of the present invention the specific key is used as content within a system information block - so called SIB - sent from the mobile radio network to the mobile device with a so called SIB message. This advantageously enables the user to receive additional location related information according to their needs and the respective agreement with the network operator.

A preferred embodiment of the present invention is characterized in that the specific key is a message authentication code, so called MAC.

According to a further embodiment of the present invention the specific key is advantageously transmitted from or via the so called NodeB, preferably so called eNodeB, responsible for the radio cell of the mobile radio network to the mobile device. Advantageously a key can be provided from other network elements such as MME or others, preferably within Attach procedure. A further advantage of such application is the saving of a battery and ensuring that the corresponding information is received by authorized entity (subscriber) only.

The information item to be provided to the mobile device for reproduction and/or usage by the mobile device for a further service and/or an application operated on side of the mobile device is or comprises positioning technology assistance information, preferably such as global cell ID of the current radio cell, cell antenna position of the radio cell, GNSS based measurement of the current position of the antenna position of the radio cell and/or vector at cell antenna position of the radio cell, GNSS ephemerides received from satellites relating to the radio cell together with actual GNSS Almanac including validity area indication of the radio cell, GNSS Doppler shift, GNSS correction data from services like EGNOS and/or SAPOS, Mobile Radio Network propagation channel, model and/or characteristics to be applied for the radio cell for broadcasting, and/or NodeB respectively eNodeB specific system data.

Exact positioning of mobile devices is a key function required by multiple industries today. A number of well-known solutions to achieve position information of the device and at the device are known today. The accuracy of the derived position information depends on a large number of factors specifically on the type of technology used to derive the position and the environmental conditions the positioning device is facing. Typically the GNSS technology is applied where related Satellite signals are available. Alternatively Trilateration Technology is applied where terrestrial Radio signals are available (e.g. LORAN, WLAN or mobile Networks). Map matching and Fingerprinting Technology is applied, where related databases with characteristics versus position mapping databases are available. In most solutions implemented today a combination of various positioning technologies is applied.

In mobile radio networks currently any assistance information for the positioning technologies to improve their accuracy is transported through dedicated mobile network Channels (user plane or control plane) to the mobile device using different techniques like LPP specified in TS 36.355 or LPPa as specified in TS 36.455, which is explicitly referenced herewith as disclosure of the present invention. Such assistance data mainly addresses directly or indirectly environmental dependencies which are relatively equal for the set of mobile devices remaining in a certain area where the environmental dependencies only vary within small limits. These areas typically equal the size of the area covered with mobile radio network service by one or more collocated radio network cells. As a consequence many devices retrieve identical information through individual communication Channels at the same time.

According to the present invention it is supposed to broadcast any positioning technology assistance information within a radio cell of the mobile radio network to the relevant set of mobile devices within the same environmental conditions (I.e. cell area) in order to save transmission efforts in the mobile radio networks and at the same time improve the latency effects caused by the on demand communication through dedicated Channels.

Advantageously the positioning technology assistance information is integrity protected, preferably to allow a differentiation and/or charging of application defined services, more preferably in dependence of the subscription the user of the mobile device has with the mobile radio network. This advantageously will enable the users to get location information needed for their service.

A further preferred embodiment of the present invention is characterized in that the mobile radio network is a mobile radio network according to 4G standard respectively LTE standard and the information item is broadcasted to the mobile device via MBMS and/or eMBMS. This advantageously will also enable the users to get location information needed for their service.

The mobile radio network is a mobile radio network according to 4G standard respectively LTE standard and the information item is broadcasted to the mobile device via a SIB Message. This advantageously will also enable the users to get location information needed for their service.

As a technical solution the present invention further proposes a communication system for providing information to a mobile device operated in a mobile radio network forming a service area having a cellular network structure composed of radio cells, whereby the mobile radio network and the mobile device are designed and/or adapted to execute the steps of a method according to the present invention.

Object of the present invention is further a mobile radio network forming a service area having a cellular network structure composed of radio cells for providing information to a mobile device operated in the mobile radio network, wherein the mobile radio network is designed and/or adapted to
- provide an information item to the mobile device for reproduction and/or usage by the mobile device for a further service and/or an application operated on side of the mobile device, wherein the information item is encoded with a key on side of the mobile radio network, and
- transmit the encoded information item from the mobile radio network to the mobile device via a broadcast channel used within at least one radio cell of the mobile radio network,
characterized in that

the mobile radio network is designed and/or adapted to provide the key to the mobile device when the mobile device connects to a radio cell of the mobile radio network for the first time,
the information item is or comprises positioning technology assistance information, and
the mobile radio network is a mobile radio network according to 4G standard respectively LTE standard and the information item is broadcasted to the mobile device via a SIB Message.

Object of the present invention is further a mobile device operated respectively operate-able in a mobile radio network forming a service area having a cellular network structure composed of radio cells for providing information from the mobile radio network to the mobile device, wherein the mobile device is designed and/or adapted to
- receive an information item from a radio cell of the mobile radio network via a broadcast channel, and
- decode the information item on side of the mobile device by using a key,
characterized in that
the mobile device is designed and/or adapted to receive the key from the mobile radio network when the mobile device connects to a radio cell of the mobile radio network for the first time,
the information item is or comprises positioning technology assistance information, and
the mobile radio network is a mobile radio network according to 4G standard respectively LTE standard and the information item is broadcasted to the mobile device via a SIB Message.

Further details, characteristics and/or advantages of the present invention will be explained in detail in the following by means of the exemplary embodiments represented in the figures. Herein
- Fig. 1: shows in a schematic diagram the entities of a communication system and the information flows between these during an attach procedure according to ETSI TS 123 401 V13.8.0 (2016-10), chapter 5.3.2, Figure 5.3.2.1-1;
- Fig. 2: shows in a schematic diagram the entities of a communication system and the information flows between these when providing information to a mobile device operated in a mobile radio network according to a first embodiment of a method according to the present invention; and
- Fig. 3: shows in a schematic diagram the entities of a communication system and the information flows between these when providing information to a mobile device operated in a mobile radio network according to a second embodiment of a method according to the present invention.

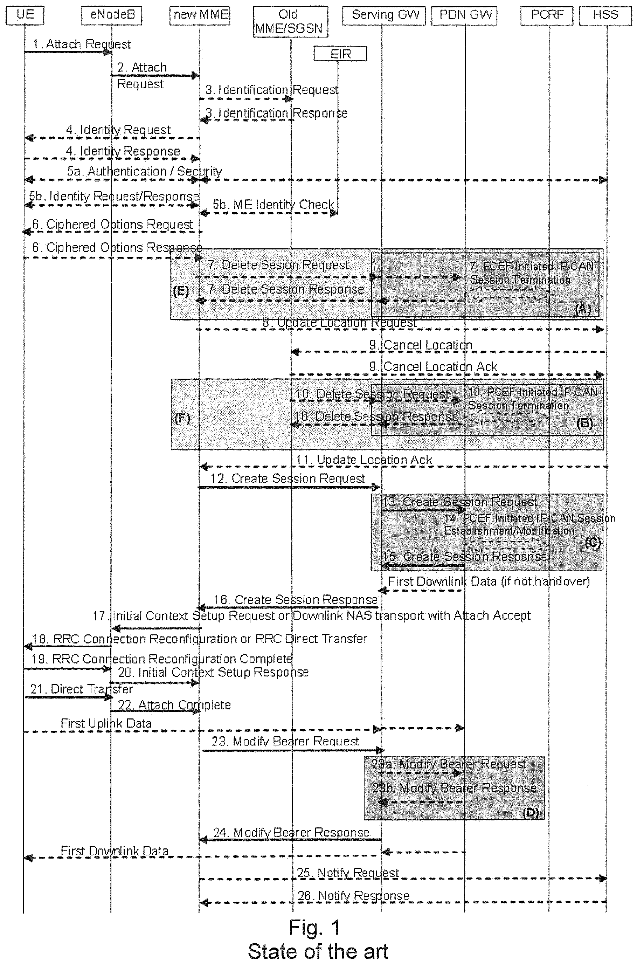

Fig. 1 is known from ETSI TS 123 401 V13.8.0 (2016-10), "LTE; General Packet Radio Service (GPRS) enhancements for Evolved Universal Terrestrial Radio Access Network (E-UTRAN) access (3GPP TS 23.401 version 13.8.0 Release 13)" - which is explicitly referenced herewith as disclosure of the present invention - and is described in chapter 5.3.2, "Attach Procedure" as follows:

### "5.3.2 Attach procedure

### 5.3.2.1 E-UTRAN Initial Attach

A UE/user needs to register with the network to receive services that require registration. This registration is described as Network Attachment. The always-on IP connectivity for UE/users of the EPS may be enabled by establishing a default EPS bearer during Network Attachment. The PCC rules applied to the default EPS bearer may be predefined in the PDN GW and activated in the attachment by the PDN GW itself. The Attach procedure may trigger one or multiple Dedicated Bearer Establishment procedures to establish dedicated EPS bearer(s) for that UE. During the attach procedure, the UE may request for an IP address allocation. Terminals utilising only IETF based mechanisms for IP address allocation are also supported.

During the Initial Attach procedure the Mobile Equipment Identity is obtained from the UE. The MME operator may check the ME Identity with an EIR. The MME passes the ME Identity (IMEISV) to the HSS and to the PDN GW.

During the Initial Attach procedure, if the MME supports SRVCC and if any of the conditions described in step 8 in Figure 5.3.2.1-1 **(compare present** **Fig. 1****)** are satisfied, the MME informs the HSS with the UE SRVCC capability e.g. for further IMS registration.

The E-UTRAN Initial Attach procedure is used for Emergency Attach by UEs that need to perform emergency services but cannot gain normal services from the network. These UEs are in limited service state as defined in TS 23.122 [10].

Also UEs that had attached for normal services and do not have emergency bearers established and are camped on a cell in limited service state (e.g. restricted Tracking Area or not allowed CSG) shall initiate the Attach procedures indicating that the attach is to receive emergency services. UEs that camp normally on a cell, i.e. UEs that are not in limited service state, should initiate normal initial attach when not already attached and shall initiate the UE Requested PDN Connectivity procedure to receive emergency EPS bearer services.

NOTE 1: A UE that is emergency attached performs initial attach procedure before being able to obtain normal services.

In order to limit load on the network, only when performing an E-UTRAN Attach with a new PLMN (i.e. not the registered PLMN or an equivalent PLMN of the registered PLMN), a UE configured to perform Attach with IMSI at PLMN change (see TS 24.368 [69]) shall identify itself by its IMSI instead of any stored temporary identifier.

This procedure is also used to establish the first PDN connection over E-UTRAN when the UE already has active PDN connections over a non-3GPP access network and wants to establish simultaneous PDN connections to different APNs over multiple accesses.

NOTE 2: For a PMIP-based S5/S8, procedure steps (A), (B), and (C) are defined in TS 23.402 [2]. Steps 7, 10, 13, 14, 15 and 23a/b concern GTP based S5/S8.

NOTE 3: The Serving GWs and PDN GWs involved in steps 7 and/or 10 may be different to those in steps 13-15.

NOTE 4: The steps in (D) are executed only upon handover from non-3GPP access or if Presence Reporting Area Information is received from the MME.

NOTE 5: More detail on procedure steps (E) is defined in the procedure steps (B) in clause 5.3.8.3.

NOTE 6: More detail on procedure steps (F) is defined in the procedure steps (B) in clause 5.3.8.4.
1. A UE, camping on an E-UTRAN cell reads the related System Information Broadcast.
   An E-UTRAN cell for a PLMN that supports CloT enhancements shall broadcast:
   For the NB-IoT case:
      - Whether it can connect to an MME which supports EPS Attach without PDN Connectivity.
   For the WB-E-UTRAN case:
      - Whether it supports Control Plane CloT EPS Optimisation and it can connect to an MME which supports Control Plane CloT EPS Optimisation.
      - Whether it supports User Plane CloT EPS Optimisation and it can connect to an MME which supports User Plane CloT EPS Optimisation.
      - Whether it can connect to an MME which supports EPS Attach without PDN Connectivity.
   If the PLMN does not advertise support of EPS attach without PDN connectivity and the UE can only attach without PDN connectivity, then the UE shall not attach to the PLMN in this cell and shall proceed as specified in TS 23.122 [10].
   In the case of WB-E-UTRAN, if the PLMN does not support Control Plane CloT EPS Optimisation, and the UE only supports Control Plane CloT EPS Optimisation and cannot otherwise attach, then the UE shall not proceed with the Attach to the PLMN in this cell and shall proceed as specified in TS 23.122 [10].
   If the UE can proceed to attach, it initiates the Attach procedure by the transmission, to the eNodeB, of an Attach Request (IMSI or old GUTI, Old GUTI type, last visited TAI (if available), UE Core Network Capability, UE Specific DRX parameters, extended idle mode DRX parameters, Attach Type, ESM message container (Request Type, PDN Type, Protocol Configuration Options, Ciphered Options Transfer Flag, Header Compression Configuration), KSIASME, NAS sequence number, NAS-MAC, additional GUTI, P-TMSI signature, Voice domain preference and UE's usage setting, Preferred Network behaviour, MS Network Capability) message together with RRC parameters indicating the Selected Network and the old GUMMEI.
   In the RRC connection establishment signalling associated with the Attach Request, the UE indicates its support of the CloT EPS Optimisations, relevant for MME selection.
   If the UE identifies itself with the old GUTI, the UE shall set the Old GUTI Type to indicate whether the Old GUTI is a native GUTI or is mapped from a P-TMSI and RAI. The old GUTI may be derived from a P-TMSI and RAI. IMSI shall be included if the UE does not have a valid GUTI or a valid P-TMSI available, or if the UE is configured to perform Attach with IMSI at PLMN change and is accessing a new PLMN. The UE stores the TIN in detached state. If the UE's TIN indicates "GUTI" or "RAT-related TMSI" and the UE holds a valid GUTI then the old GUTI indicates this valid GUTI. If the UE's TIN indicates "P-TMSI" and the UE holds a valid P-TMSI and related RAI then these two elements are indicated as the old GUTI. Mapping a P-TMSI and RAI to a GUTI is specified in TS 23.003 [9]. If the UE holds a valid GUTI and the old GUTI indicates a GUTI mapped from a P-TMSI and RAI, then the UE indicates the GUTI as additional GUTI. If the old GUTI indicates a GUTI mapped from a P-TMSI and RAI and the UE has a valid P-TMSI signature associated to it, the P-TMSI signature shall be included. The UE sets the voice domain preference and UE's usage setting according to its configuration, as described in clause 4.3.5.9.
   Alternatively, when a UE only supports E-UTRAN, if the UE has a GUTI available and the UE is accessing the same PLMN (or ePLMN), then it identifies itself with the old GUTI and sets the Old GUTI Type to 'native', otherwise the UE configuration determines whether the UE identifies itself with its IMSI or the Old GUTI.
   The UE includes the extended idle mode DRX parameters information element if the UE needs to enable extended idle mode DRX.
   If available, the last visited TAI shall be included in order to help the MME produce a good list of TAIs for any subsequent Attach Accept message. Selected Network indicates the PLMN that is selected for network sharing purposes. The RRC parameter "old GUMMEI" takes its value from the "old GUTI" contained in the Attach Request. UE Network Capability is described in UE capabilities, see clause 5.11.
   If the UE has valid security parameters, the Attach Request message shall be integrity protected by the NASMAC in order to allow validation of the UE by the MME. KSIASME, NAS sequence number and NAS-MAC are included if the UE has valid EPS security parameters. NAS sequence number indicates the sequential number of the NAS message. If the UE does not have a valid EPS security association, then the Attach Request message is not integrity protected. In this case the security association is established in step 5a. The UE network capabilities indicate also the supported NAS and AS security algorithms.
   PDN type indicates the requested IP version (IPv4, IPv4/IPv6, IPv6). For a UE that support CloT EPS
   optimisations, the PDN type may also be "Non-IP " Protocol Configuration Options (PCO) are used to transfer parameters between the UE and the PDN GW, and are sent transparently through the MME and the Serving GW. The Protocol Configuration Options may include the Address Allocation Preference indicating that the UE prefers to obtain an IPv4 address only after the default bearer activation by means of DHCPv4. If the UE intends to send PCO which require ciphering (e.g., PAP/CHAP usernames and passwords) or send an APN, or both, the UE shall set the Ciphered Options Transfer Flag and send PCO or APN or both only after authentication and NAS security setup have been completed (see below).
   NOTE 7: External network operators wanting to use PAP for authentication are warned that PAP is an obsolete protocol from a security point of view. CHAP provides stronger security than PAP.
   If the UE has UTRAN or GERAN capabilities, it shall send the NRSU in the PCO to indicate the support of the network requested bearer control in UTRAN/GERAN. The UE sends the ETFTU in the PCO to indicate the support of the extended TFT filter format. Request Type is included in the ESM message container and indicates "Handover" when the UE has already an activated PDN GW/HA due to mobility with non-3GPP accesses.
   If a UE indicates support of CloT Optimisations in the RRC message, it may omit the ESM message container. If the ESM message container is omitted the MME shall not establish a PDN connection as part of the Attach procedure. In this case steps 6, 12 to 16 and 23 to 26 are not executed. In addition, for the case of UEs attaching with Control Plane CloT EPS Optimisation with no user plane establishment, steps 17 to 22 are replaced by S1 AP NAS Transport and RRC Direct Transfer messages that just transport the NAS Attach Accept and NAS Attach Complete messages.
   Attach Type indicates whether it is an EPS attach or a combined EPS/IMSI attach or an Emergency Attach. Emergency Attach shall not be indicated when the UE is using NB-IoT. When using C-loT EPS optimisations, the UE may indicate EPS attach and request SMS by setting the "SMS transfer without Combined Attach" flag in the Preferred Network Behaviour IE.
   If a UE includes a Preferred Network Behaviour, this defines the Network Behaviour the UE is expecting to be available in the network as defined in clause 4.3.5.10.
   If a UE indicated Control Plane CloT EPS optimisation supported in Preferred Network Behavior, and the UE included the ESM message container, and the PDN type was IPv4 or IPv6 or IPv4v6, and the UE supports header compression, it shall include the Header Compression Configuration,. The Header Compression Configuration includes the information necessary for the ROHC channel setup. Optionally, the Header Compression Configuration may include additional header compression context setup parameters if the UE already has the application traffic information, e.g. the target server IP address.
   For an Emergency Attach the UE shall set both the Attach Type and the Request Type to "Emergency" and the IMSI shall be included if the UE does not have a valid GUTI or a valid P-TMSI available. The IMEI shall be included when the UE has no IMSI, no valid GUTI and no valid P-TMSI.
2. The eNodeB derives the MME address from the RRC parameters carrying the old GUMMEI, the indicated Selected Network and the RAT (NB-IoT or WB-E-UTRAN). If that MME is not associated with the eNodeB or the old GUMMEI is not available, the eNodeB selects an MME as described in clause 4.3.8.3 on "MME selection function". The eNodeB forwards the Attach Request message in a S1-MME control message (Initial UE message) together with the Selected Network, CSG access mode, CSG ID, L-GW address, TAI+ECGI and RAT type of the cell from where it received the message to the new MME. CSG ID is provided if the UE attaches via a CSG cell or hybrid cell. CSG access mode is provided if the UE attaches via a hybrid cell. If the CSG access mode is not provided but the CSG ID is provided, the MME shall consider the cell as a CSG cell. If the eNodeB has a collocated L-GW, it includes the L-GW address in the Initial UE message to the MME.
   If the MME is not configured to support Emergency Attach the MME shall reject any Attach Request that indicates Attach Type "Emergency".
   If the UE has included the Preferred Network Behaviour, and what the UE indicated it supports in Preferred Network Behaviour is incompatible with the network support e.g. the UE indicated support only for Control Plane CloT EPS optimisation and the MME only supports User Plane CloT EPS optimisation, the MME shall reject the Attach Request with an appropriate cause value (e.g. one that avoids retries on this PLMN).
3. If the UE identifies itself with GUTI and the MME has changed since detach, the new MME determines the type of the old node, i.e. MME or SGSN, as specified in clause 4.3.19, uses the GUTI received from the UE to derive the old MME/SGSN address, and sends an Identification Request (old GUTI, complete Attach Request message) to the old MME/SGSN to request the IMSI. If the request is sent to an old MME, the old MME first verifies the Attach Request message by NAS MAC and then responds with Identification Response (IMSI, MM Context). If the request is sent to an old SGSN, the old SGSN first verifies the Attach Request message by the P-TMSI signature and then responds with Identification Response (MM Context). If the UE is not known in the old MME/SGSN or if the integrity check or P-TMSI signature check for the Attach Request message fails, the old MME/SGSN responds with an appropriate error cause. The MM context contains security related information as well as other parameters (including IMSI) as described in clause 5.7.2 (Information Storage for MME).
   The additional GUTI in the Attach Request message allows the new MME to find any already existing UE context stored in the new MME when the old GUTI indicates a GUTI mapped from a P-TMSI and RAI.
   For an Emergency Attach if the UE identifies itself with a temporary identity that is not known to the MME the MME immediately requests the IMSI from the UE. If the UE identifies itself with IMEI, the IMSI request shall be skipped.
   NOTE 8: A SGSN always responds with the UMTS security parameters and the MME may store it for later use.
4. If the UE is unknown in both the old MME/SGSN and new MME, the new MME sends an Identity Request to the UE to request the IMSI. The UE responds with Identity Response (IMSI).
5a If no UE context for the UE exists anywhere in the network, if the Attach Request (sent in step 1) was not integrity protected, or if the check of the integrity failed, then authentication and NAS security setup to activate integrity protection and NAS ciphering are mandatory. Otherwise it is optional. If NAS security algorithm is to be changed, the NAS security setup is performed in this step. The authentication and NAS security setup functions are defined in clause 5.3.10 on "Security Function".
   If the MME is configured to support Emergency Attach for unauthenticated IMSIs and the UE indicated Attach Type "Emergency" the MME skips the authentication and security setup or the MME accepts that the authentication may fail and continues the attach procedure.
   After step 5a, all NAS messages shall be protected by the NAS security functions (integrity and ciphering) indicated by the MME unless the UE is emergency attached and not successfully authenticated.
5b. The ME Identity (IMEISV) shall be retrieved from the UE. The ME identity shall be transferred encrypted unless the UE performs Emergency Attach and cannot be authenticated.
   For an Emergency Attach, the UE may have included the IMEI in the Emergency Attach. If so, the ME Identity retrieval is skipped.
   In order to minimise signalling delays, the retrieval of the ME Identity may be combined with NAS security setup in step 5a. The MME may send the ME Identity Check Request (ME Identity, IMSI) to the EIR. The EIR shall respond with ME Identity Check Ack (Result). Dependent upon the Result, the MME decides whether to continue with this Attach procedure or to reject the UE.
   For an Emergency Attach, the IMEI check to the EIR may be performed. If the IMEI is blocked, operator policies determine whether the Emergency Attach procedure continues or is stopped.
6. If the UE has set the Ciphered Options Transfer Flag in the Attach Request message, the Ciphered Options i.e. PCO or APN or both, shall now be retrieved from the UE.
   In order to handle situations where the UE may have subscriptions to multiple PDNs, if the Protocol Configuration Options contains user credentials (e.g. user name/password within PAP or CHAP parameters) then the UE should also send the APN to the MME.
7. If there are active bearer contexts in the new MME for this particular UE (i.e. the UE re-attaches to the same MME without having properly detached before), the new MME deletes these bearer contexts by sending Delete Session Request (LBI) messages to the GWs involved. The GWs acknowledge with Delete Session Response (Cause) message. If a PCRF is deployed, the PDN GW employs an IP-CAN Session Termination procedure to indicate that resources have been released.
8. If the MME has changed since the last detach, or if there is no valid subscription context for the UE in the MME, or if the UE provides an IMSI or the UE provides an old GUTI which doesn't refer to a valid context in the MME, or for some network sharing scenario (e.g. GWCN) if the PLMN-ID of the TAI supplied by the eNodeB is different from that of the GUTI in the UE's context, the MME sends an Update Location Request (MME Identity, IMSI, ME Identity (IMEISV), MME Capabilities, ULR-Flags, Homogeneous Support of IMS Voice over PS Sessions, UE SRVCC capability, equivalent PLMN list) message to the HSS. The MME capabilities indicate the MME's support for regional access restrictions functionality. ULR-Flags indicates "Initial-Attach-Indicator" as this is an Attach procedure. The inclusion of the equivalent PLMN list indicates that the MME supports the inter-PLMN handover to a CSG cell in an equivalent PLMN using the subscription information of the target PLMN. The "Homogenous Support of IMS Voice over PS Sessions" indication (see clause 4.3.5.8A) shall not be included unless the MME has completed its evaluation of the support of "IMS Voice over PS Session" as specified in clause 4.3.5.8.
   NOTE 9: At this step, the MME may not have all the information needed to determine the setting of the IMS Voice over PS Session Supported indication for this UE (see clause 4.3.5.8). Hence the MME can send the "Homogenous Support of IMS Voice over PS Sessions" later on in this procedure.
   If the UE performs Initial or Handover Attach in a VPLMN supporting Autonomous CSG Roaming and the HPLMN has enabled Autonomous CSG Roaming in the VPLMN (via Service Level Agreement) and the MME needs to retrieve the CSG subscription information of the UE from the CSS, the MME initiates the Update CSG Location Procedure with CSS as described in clause 5.3.12.
   If the MME determines that only the UE SRVCC capability has changed, the MME sends a Notify Request to the HSS to inform about the changed UE SRVCC capability.
   For an Emergency Attach in which the UE was not successfully authenticated, the MME shall not send an Update Location Request to the HSS.
9. The HSS sends Cancel Location (IMSI, Cancellation Type) to the old MME. The old MME acknowledges with Cancel Location Ack (IMSI) and removes the MM and bearer contexts. If the ULR-Flags indicates "Initial-Attach-Indicator" and the HSS has the SGSN registration, then the HSS sends Cancel Location (IMSI, Cancellation Type) to the old SGSN. The Cancellation Type indicates the old MME/SGSN to release the old Serving GW resource.
10. If there are active bearer contexts in the old MME/SGSN for this particular UE, the old MME/SGSN deletes these bearer contexts by sending Delete Session Request (LBI) messages to the GWs involved. The GWs return Delete Session Response (Cause) message to the old MME/SGSN. If a PCRF is deployed, the PDN GW employs an IP-CAN Session Termination procedure as defined in TS 23.203 [6] to indicate that resources have been released.
11. The HSS acknowledges the Update Location message by sending an Update Location Ack (IMSI, Subscription data) message to the new MME. The Subscription Data contain one or more PDN subscription contexts. Each PDN subscription context contains an 'EPS subscribed QoS profile' and the subscribed APN-AMBR (see clause 4.7.3) and the WLAN offloadability indication (see clause 4.3.23). The new MME validates the UE's presence in the (new) TA. If due to regional subscription restrictions or access restrictions (e.g. CSG restrictions) the UE is not allowed to attach in the TA or due to subscription checking fails for other reasons, the new MME rejects the Attach Request with an appropriate cause. If all checks are successful then the new MME constructs a context for the UE. If the APN provided by the UE is not allowed by subscription, or the Update Location is rejected by the HSS, the new MME rejects the Attach Request from the UE with an appropriate cause.
   The Subscription Data may contain CSG subscription information for the registered PLMN and for the equivalent PLMN list requested by MME in step 8.
   If the UE provided APN is authorized for LIPA according to the user subscription, the MME shall use the CSG Subscription Data to authorize the connection.
   For an Emergency Attach the MME shall not check for access restrictions, regional restrictions or subscription restrictions (e.g. CSG restrictions). For an Emergency Attach, the MME shall ignore any unsuccessful Update Location Response from HSS and continue with the Attach procedure.
12. If an ESM container was not included in the Attach Request, steps 12, 13,14,15,16 are skipped.
   For an Emergency Attach the MME applies the parameters from MME Emergency Configuration Data for the emergency bearer establishment performed in this step and any potentially stored IMSI related subscription data are ignored by the MME.
   If the UE performs Initial or Handover Attach via a CSG cell and there is no subscription for that CSG or the CSG subscription is expired the MME shall reject the Attach Request with an appropriate cause. If the UE has this CSG ID and associated PLMN on its Allowed CSG list the UE shall remove the CSG ID and associated PLMN from the list when receiving this reject cause.
   If a subscribed PDN address is allocated for the UE for this APN, the PDN subscription context contains the UE's IPv4 address and/or the IPv6 prefix and optionally the PDN GW identity. If the PDN subscription context contains a subscribed IPv4 address and/or IPv6 prefix, the MME indicates it in the PDN address. For Request Type indicating "Initial request", if the UE does not provide an APN, the MME shall use the PDN GW corresponding to the default APN for default bearer activation. If the UE provides an APN, this APN shall be employed for default bearer activation. For Request Type indicating "Handover", if the UE provides an APN, the MME shall use the PDN GW corresponding to the provided APN for default bearer activation, If the UE does not provide an APN, and the subscription context from HSS contains a PDN GW identity corresponding to the default APN, the MME shall use the PDN GW corresponding to the default APN for default bearer activation. The case where the Request Type indicates "Handover" and the UE does not provide an APN, and the subscription context from HSS does not contain a PDN GW identity corresponding to the default APN constitutes an error case. If the Request Type indicates "Initial request" and the selected PDN subscription context contains no PDN GW identity the new MME selects a PDN GW as described in clause 4.3.8.1 on PDN GW selection function (3GPP accesses). If the PDN subscription context contains a dynamically allocated PDN GW identity and the Request Type does not indicate "Handover" the MME may select a new PDN GW as described in clause PDN GW selection function, e.g. to allocate a PDN GW that allows for more efficient routing.
   For initial and handover Emergency Attach the MME uses the PDN GW Selection function defined in clause 4.3.12.4 to select a PDN GW.
   If the subscription context does not indicate that the APN is for a PDN connection to an SCEF, the new MME selects a Serving GW as described in clause 4.3.8.2 on Serving GW selection function and allocates an EPS Bearer Identity for the Default Bearer associated with the UE. Then it sends a Create Session Request (IMSI, MSISDN, MME TEID for control plane, PDN GW address, PDN Address, APN, RAT type, Default EPS Bearer QoS, PDN Type, APN-AMBR, EPS Bearer Identity, Protocol Configuration Options, Handover Indication, ME Identity (IMEISV), User Location Information (ECGI), UE Time Zone, User CSG Information, MS Info Change Reporting support indication, Selection Mode, Charging Characteristics, Trace Reference, Trace Type, Trigger Id, OMC Identity, Maximum APN Restriction, Dual Address Bearer Flag, the Protocol Type over S5/S8, Serving Network) message to the selected Serving GW. If Control Plane CloT EPS Optimisation applies, then the MME shall also indicate S11-U tunnelling of NAS user data and send its own S11-U IP address and MME DL TEID for DL data forwarding by the SGW. User CSG Information includes CSG ID, access mode and CSG membership indication.
   For PDN type "non-IP" when Control plane CloT EPS optimisations are enabled for the UE, if APN subscription data indicate a SCEF connection needs to be used, then the MME allocates an EPS Bearer Identity for the Default Bearer associated with the UE and establishes a connection to the SCEF address indicated in subscription data as per TS 23.682 [74] and the steps 12,13,14,15,16 are not executed. The rest of the interactions with the UE apply as specified below.
   If the MME determines the PDN connection shall only use the Control Plane CloT EPS Optimisation, the MME shall include a Control Plane Only PDN Connection Indicator in Create Session Request.
   If the Request Type indicates "Emergency", Maximum APN restriction control shall not be performed.
   For emergency attached UEs IMSI is included if available and if the IMSI cannot be authenticated then the IMSI shall be marked as unauthenticated.
   The RAT type is provided in this message for the later PCC decision. The RAT type shall distinguish between NB-loT and WB-E-UTRA types. The subscribed APN-AMBR for the APN is also provided in this message. The MSISDN is included if provided in the subscription data from the HSS. Handover Indication is included if the Request Type indicates handover. Selection Mode indicates whether a subscribed APN was selected, or a nonsubscribed APN sent by the UE was selected. Charging Characteristics indicates which kind of charging the bearer context is liable for. The MME may change the requested PDN type according to the subscription data for this APN as described in clause 5.3.1.1. The MME shall set the Dual Address Bearer Flag when the PDN type is set to IPv4v6 and all SGSNs which the UE may be handed over to are Release 8 or above supporting dual addressing, which is determined based on node pre-configuration by the operator. The Protocol Type over S5/S8 is provided to Serving GW which protocol should be used over S5/S8 interface.
   The charging characteristics for the PS subscription and individually subscribed APNs as well as the way of handling Charging Characteristics and whether to send them or not to the P-GW is defined in TS 32.251 [44].
   The MME shall include Trace Reference, Trace Type, Trigger Id, and OMC Identity if S-GW and/or P-GW trace is activated. The MME shall copy Trace Reference, Trace Type, and OMC Identity from the trace information received from the HLR or OMC.
   The Maximum APN Restriction denotes the most stringent restriction as required by any already active bearer context. If there are no already active bearer contexts, this value is set to the least restrictive type (see clause 15.4 of TS 23.060 [7]). If the P-GW receives the Maximum APN Restriction, then the P-GW shall check if the Maximum APN Restriction value does not conflict with the APN Restriction value associated with this bearer context request. If there is no conflict the request shall be allowed, otherwise the request shall be rejected with sending an appropriate error cause to the UE.
   If the MME requires the eNB to check whether the UE radio capabilities are compatible with the network configuration (e.g. whether the SRVCC or frequency support by the UE matches that of the network) to be able to set the IMS voice over PS Session Supported Indication (see clause 4.3.5.8), then the MME may send a UE Radio Capability Match Request to the eNB as defined in clause 5.3.14.
13. The Serving GW creates a new entry in its EPS Bearer table and sends a Create Session Request (IMSI, MSISDN, APN, Serving GW Address for the user plane, Serving GW TEID of the user plane, Serving GW TEID of the control plane, RAT type, Default EPS Bearer QoS, PDN Type, PDN Address, subscribed APNAMBR, EPS Bearer Identity, Protocol Configuration Options, Handover Indication, ME Identity, User Location Information (ECGI), UE Time Zone, User CSG Information, MS Info Change Reporting support indication, PDN Charging Pause Support indication, Selection Mode, Charging Characteristics, Trace Reference, Trace Type, Trigger Id, OMC Identity, Maximum APN Restriction, Dual Address Bearer Flag, Serving Network) message to the PDN GW indicated by the PDN GW address received in the previous step. After this step, the Serving GW buffers any downlink packets it may receive from the PDN GW without sending a Downlink Data Notification message to the MME until it receives the Modify Bearer Request message in step 23 below. The MSISDN is included if received from the MME.
   If the Serving GW has received the Control Plane Only PDN Connection Indicator in step 12, the Serving GW informs the PGW this information in Create Session Request. The Serving GW and PDN GW shall indicate the use of CP only on their CDRs.
   PDN GWs shall not perform any checks of Maximum APN Restriction if Create Default Bearer Request includes the emergency APN.
   For emergency attached UEs IMSI is included if available and if the IMSI cannot be authenticated then the IMSI shall be marked as unauthenticated.
14. If dynamic PCC is deployed and the Handover Indication is not present, the PDN GW performs an IP-CAN Session Establishment procedure as defined in TS 23.203 [6], and thereby obtains the default PCC rules for the UE. This may lead to the establishment of a number of dedicated bearers following the procedures defined in clause 5.4.1 in association with the establishment of the default bearer, which is described in Annex F.
   The IMSI, APN, UE IP address, User Location Information (ECGI), UE Time Zone, Serving Network, RAT type, APN-AMBR, Default EPS Bearer QoS, ETFTU (if ETFTU is not provided it means UE and/or the PDN GW does not support the extended TFT filter format) are provided to the PCRF by the PDN GW if received by the previous message. The User Location Information and UE Time Zone are used for location based charging. For emergency attached UEs which are unauthenticated the PDN GW provides the IMEI as the UE Identity instead of IMSI, to the PCRF. If the PCRF decides that the PDN connection may use the extended TFT filter format, it shall return the ETFTN indicator to the PDN GW for inclusion in the protocol Configuration Options returned to the UE.
   The PCRF may modify the APN-AMBR and the QoS parameters (QCI and ARP) associated with the default bearer in the response to the PDN GW as defined in TS 23.203 [6].
   If the PCC is configured to support emergency services and if dynamic PCC is deployed, the PCRF, based on the emergency APN, sets the ARP of the PCC rules to a value that is reserved for emergency services and the authorization of dynamic PCC rules as described in of TS 23.203 [6]. If dynamic PCC is not deployed, the PDN GW uses the ARP of the default emergency EPS bearer for any potentially initiated dedicated emergency EPS bearer. The P-GW determines that emergency services are requested based on the emergency APN received in Create Session Request message. NOTE 10: While the PDN GW/PCEF may be configured to activate predefined PCC rules for the default bearer, the interaction with the PCRF is still required to provide e.g. the UE IP address information to the PCRF.
   NOTE 11: If the IP address is not available when the PDN GW performs the IP-CAN Session Establishment procedure with the PCRF, the PDN GW initiates an IP-CAN Session Modification procedure to inform the PCRF about an allocated IP address as soon as the address is available. In this version of the specification, this is applicable only to IPv4 address allocation.
   If dynamic PCC is deployed and the Handover Indication is present, the PDN GW executes a PCEF Initiated IP-CAN Session Modification procedure with the PCRF as specified in TS 23.203 [6] to report the new IP-CAN type. Depending on the active PCC rules, the establishment of dedicated bearers for the UE may be required. The establishment of those bearers shall take place in combination with the default bearer activation as described in Annex F. This procedure can continue without waiting for a PCRF response. If changes to the active PCC rules are required, the PCRF may provide them after the handover procedure is finished.
   In both cases (Handover Indication is present or not), if dynamic PCC is not deployed, the PDN GW may apply local QoS policy. This may lead to the establishment of a number of dedicated bearers for the UE following the procedures defined in clause 5.4.1 in combination with the establishment of the default bearer, which is described in Annex F.
   If the CSG information reporting triggers are received from the PCRF, the PDN GW should set the CSG Information Reporting Action IE accordingly.
15. The P-GW creates a new entry in its EPS bearer context table and generates a Charging Id for the Default Bearer. The new entry allows the P-GW to route user plane PDUs between the S-GW and the packet data network, and to start charging. The way the P-GW handles Charging Characteristics that it may have received is defined in TS 32.251 [44].
   The PDN GW returns a Create Session Response (PDN GW Address for the user plane, PDN GW TEID of the user plane, PDN GW TEID of the control plane, PDN Type, PDN Address, EPS Bearer Identity, EPS Bearer QoS, Protocol Configuration Options, Charging Id, Prohibit Payload Compression, APN Restriction, Cause, MS Info Change Reporting Action (Start) (if the PDN GW decides to receive UE's location information during the session), CSG Information Reporting Action (Start) (if the PDN GW decides to receive UE's User CSG information during the session), Presence Reporting Area Action (if the PDN GW decides to receive notifications about a change of UE presence in Presence Reporting Area), PDN Charging Pause Enabled indication (if PDN GW has chosen to enable the function), APN-AMBR, Delay Tolerant Connection) message to the Serving GW.
   The PDN GW takes into account the received PDN type, the Dual Address Bearer Flag and the policies of operator when the PDN GW selects the PDN type to be used as follows. If the received PDN type is IPv4v6 and both IPv4 and IPv6 addressing is possible in the PDN but the Dual Address Bearer Flag is not set, or only single IP version addressing for this APN is possible in the PDN, the PDN GW selects a single IP version (either IPv4 or IPv6). If the received PDN type is IPv4 or IPv6 or "Non IP", the PDN GW uses the received PDN type if it is supported in the PDN, otherwise an appropriate error cause will be returned. For IPv4, IPv6 and IPv4v6, the PDN GW allocates a PDN Address according to the selected PDN type. If the PDN GW has selected a PDN type different from the received PDN Type, the PDN GW indicates together with the PDN type IE a reason cause to the UE why the PDN type has been modified, as described in clause 5.3.1.1. The PDN GW shall either accept or reject (but not modify) the PDN type if the PDN type is set to "Non IP". PDN Address may contain an IPv4 address for IPv4 and/or an IPv6 prefix and an Interface Identifier, or be omitted for PDN type "Non IP". If the PDN has been configured by the operator so that the PDN addresses for the requested APN shall be allocated by usage of DHCPv4 only, or if the PDN GW allows the UE to use DHCPv4 for address allocation according to the Address Allocation Preference received from the UE, the PDN Address shall be set to 0.0.0.0, indicating that the IPv4 PDN address shall be negotiated by the UE with DHCPv4 after completion of the Default Bearer Activation procedure. For external PDN addressing for IPv6, the PDN GW obtains the IPv6 prefix from the external PDN using either RADIUS or Diameter client function. In the PDN Address field of the Create Session Response, the PDN GW includes the Interface Identifier and IPv6 prefix. The PDN GW sends Router Advertisement to the UE after default bearer establishment with the IPv6 prefix information for all cases.
   If the PDN address is contained in the Create Session Request, the PDN GW shall allocate the IPv4 address and/or IPv6 prefix contained in the PDN address to the UE. The IP address allocation details are described in clause 5.3.1 on "IP Address Allocation". The PDN GW derives the BCM based on the NRSU and operator policy. The PDN GW derives whether the extended TFT filter format is to be used based on the ETFTU, ETFTN received from the PCRF and operator policy. Protocol Configuration Options contains the BCM, ETFTN as well as optional PDN parameters that the P-GW may transfer to the UE. These optional PDN parameters may be requested by the UE, or may be sent unsolicited by the P-GW. Protocol Configuration Options are sent transparently through the MME.
   The PDN GW includes a Delay Tolerant Connection indication if the PDN GW supports receiving a rejection cause from the SGW indicating that the UE is temporarily not reachable due to power saving and holding mobile terminated procedures, until the PDN GW receives a message indicating that the UE is available for end to end signalling.
   When the Handover Indication is present, the PDN GW does not yet send downlink packets to the S-GW; the downlink path is to be switched at step 23a.
   If the PDN GW is an L-GW, it does not forward downlink packets to the S-GW. The packets will only be forwarded to the HeNB at step 20 via the direct user plane path.
16. The Serving GW returns a Create Session Response (PDN Type, PDN Address, Serving GW address for User Plane, Serving GW TEID for S1-U User Plane, Serving GW TEID for control plane, EPS Bearer Identity, EPS Bearer QoS, PDN GW addresses and TEIDs (GTP-based S5/S8) or GRE keys (PMIP-based S5/S8) at the PDN GW(s) for uplink traffic, Protocol Configuration Options, Prohibit Payload Compression, APN Restriction, Cause, MS Info Change Reporting Action (Start), Presence Reporting Area Action, CSG Information Reporting Action (Start), APN-AMBR, Delay Tolerant Connection) message to the new MME. For Control Plane CloT EPS optimisation, the Serving GW address for S11-U User Plane and Serving GW TEID are used by the MME to forward UL data to the SGW.
17. If an APN Restriction is received, then the MME shall store this value for the Bearer Context and the MME shall check this received value with the stored value for the Maximum APN Restriction to ensure there are no conflicts between values. If the Bearer Context is accepted, the MME shall determine a (new) value for the Maximum APN Restriction. If there is no previously stored value for Maximum APN Restriction, then the Maximum APN Restriction shall be set to the value of the received APN Restriction. MME shall not deactivate bearer(s) with emergency ARP, if present, to maintain valid APN restriction combination.
   The P-GW shall ignore Maximum APN restriction if the request includes the Emergency APN.
   If the MS Info Change Reporting Action (Start) and/or the CSG Information Reporting Action (Start) are received for this bearer context, then the MME shall store this for the bearer context and the MME shall report to that P-GW via the S-GW whenever a UE's location and/or User CSG information change occurs that meets the P-GW request, as described in clause 15.1.1a of TS 23.060 [7]. If Presence Reporting Area Action is received for this bearer context, the MME shall store this information for the bearer context and shall report to that P-GW via the S-GW whenever a change of UE presence in Presence Reporting Area is detected, as described in clause 5.9.2.2.
   The MME determines the UE AMBR to be used by the eNodeB based on the subscribed UE-AMBR and the APN-AMBR for the default APN, see clause 4.7.3.
   For emergency attach the MME determines the UE-AMBR to be used by the eNodeB from the APN AMBR received from the S-GW.
   If new MME hasn't received, from Step 12, Voice Support Match Indicator for the UE from the eNB then, based on implementation, the MME may set IMS Voice over PS session supported Indication and update it at a later stage. The new MME sends an Attach Accept (GUTI, TAI List, Session Management Request (APN, PDN Type, PDN Address, EPS Bearer Identity,Protocol Configuration Options, Header Compression Configuration, Control Plane Only Indicator), NAS sequence number, NAS-MAC, IMS Voice over PS session supported Indication, Emergency Service Support indicator, LCS Support Indication, Supported Network Behaviour) message to the eNodeB. GUTI is included if the new MME allocates a new GUTI. PDN Type and PDN Address are omitted if the Attach Request (step 1) did not contain an ESM message container. The MME indicates the CloT EPS optimisations it accepts in the Supported Network Behaviour information as defined in clause 4.3.5.10. This message is contained in an S1_MME control message Initial Context Setup Request, unless the MME has selected to use the Control Plane CloT EPS optimisation, or, the UE did not include the ESM message container in the Attach Request (step 1), in which case an S1-AP Downlink NAS transport message is used. The S1-AP Initial Context Setup Request message also includes the AS security context information for the UE, the Handover Restriction List, the EPS Bearer QoS, the UE-AMBR, EPS Bearer Identity, as well as the TEID at the Serving GW used for user plane and the address of the Serving GW for user plane and whether User Plane CloT EPS Optimisation is allowed for the UE. If the PDN type is set to "Non-IP" the MME includes it in the S1-AP Initial Context Setup Request so that the eNodeB disables header compression. In addition, if the PDN connection is established for Local IP Access, the corresponding S1 Initial Context Setup Request message includes a Correlation ID for enabling the direct user plane path between the HeNB and the L-GW. If the PDN connection is established for SIPTO at the Local Network with L-GW function collocated with the (H)eNB, the corresponding S1-AP Initial Context Setup Request message includes a SIPTO Correlation ID for enabling the direct user plane path between the (H)eNB and the L-GW. LIPA and SIPTO do not apply to Control Plane CloT EPS Optimisation.
   NOTE 12: In this release of the 3GPP specification the Correlation ID and SIPTO Correlation ID is set equal to the user plane PDN GW TEID (GTP-based S5) or GRE key (PMIP-based S5) that the MME has received in step 16.
   If Control Plane CloT EPS optimisation applies for an IP PDN connection, and the UE has sent in the Attach Request the Header Compression
   Configuration, and the MME supports the header compression parameters, the MME shall include the Header Compression Configuration in the PDN Connectivity Accept message. The MME also binds the uplink and downlink ROHC channels to support header compression feedback signalling. If the UE has included header compression context setup parameters in Header Compression Configuration in the Attach Request, the MME may acknowledge the header compression context setup parameters. If the ROHC context is not established during the attach procedure for the PDN connection, before using the compressed format for sending the data, the UE and the MME need to establish the ROHC context with ROHC IR packet based on Header Compression Configuration.
   If the MME based on local policy determines the PDN connection shall only use the Control Plane CloT EPS Optimisation, the MME shall include a Control Plane Only Indicator in the Session Management Request. For PDN connections with an SCEF, the MME shall always include the Control Plane Only Indicator. A UE receiving the Control Plane Only Indicator, for a PDN connection shall only use the Control Plane CloT EPS optimisation for this PDN connection.
   If the ESM container was not included in the Attach Request in step 1, then the Attach Accept message shall not include PDN related parameters, and the Downlink NAS transfer S1-AP message shall not include Access stratum context related information but may include CSG related information.
   In the Attach Accept message, the MME does not include the IPv6 prefix within the PDN Address. The MME includes the EPS Bearer QoS parameter QCI and APN-AMBR into the Session Management Request. Furthermore, if the UE has UTRAN or GERAN capabilities and the network supports mobility to UTRAN or GERAN, the MME uses the EPS bearer QoS information to derive the corresponding PDP context parameters QoS Negotiated (R99 QoS profile), Radio Priority, Packet Flow Id and TI and includes them in the Session Management Request. If the UE indicated in the UE Network Capability it does not support BSS packet flow procedures, then the MME shall not include the Packet Flow Id. Handover Restriction List is described in clause 4.3.5.7 "Mobility Restrictions". The MME sets the IMS Voice over PS session supported Indication as described in clause 4.3.5.8. LCS Support Indication indicates whether the network supports the EPC-MO-LR and/or CS-MO-LR as described in TS 23.271 [57]. The MME may include an indication whether the traffic of this PDN Connection is allowed to be offloaded to WLAN, as described in clause 4.3.23.
   If the UE initiates the Attach procedure at a hybrid cell, the MME shall check whether the CSG ID is contained in the CSG subscription and is not expired. The MME shall send an indication whether the UE is a CSG member to the RAN along with the S1-MME control message. Based on this information the RAN may perform differentiated treatment for CSG and non-CSG members.
   If the MME or PDN GW has changed the PDN Type, an appropriate reason cause shall be returned to the UE as described in clause 5.3.1.1. If the UE has indicated PDN type "Non-IP", the MME and PDN GW shall not change PDN type.
   For an emergency attached UE, i.e. for UEs that have only emergency EPS bearers established, there is no AS security context information included in the S1 control messages and there is no NAS level security when the UE cannot be authenticated. The Emergency Service Support indicator informs the UE that Emergency bearer services are supported, i.e. the UE is allowed to request PDN connectivity for emergency services.
   If the UE included extended idle mode DRX parameters information element, the MME includes extended idle mode DRX parameters information element if it decides to enable extended idle mode DRX.
18. If the eNodeB received an S1-AP Initial Context Setup Request the eNodeB sends the RRC Connection Reconfiguration message including the EPS Radio Bearer Identity to the UE, and the Attach Accept message will be sent along to the UE.
   If the eNodeB received an S1-AP Downlink NAS Transport message (e.g. containing the Attach Accept message), the eNode B sends a RRC Direct Transfer message to the UE.
   The UE shall store the QoS Negotiated, Radio Priority, Packet Flow Id and TI, which it received in the Session Management Request, for use when accessing via GERAN or UTRAN. The APN is provided to the UE to notify it of the APN for which the activated default bearer is associated. For further details, see TS 36.331 [37]. The UE may provide EPS Bearer QoS parameters to the application handling the traffic flow(s). The application usage of the EPS Bearer QoS is implementation dependent. The UE shall not reject the RRC Connection Reconfiguration on the basis of the EPS Bearer QoS parameters contained in the Session Management Request.
   If the attach procedure is initiated by manual CSG selection and occurs via a CSG cell, the UE upon receiving the Attach accept shall check if the CSG ID and associated PLMN of the cell where the UE has sent the Attach Request message is contained in its Allowed CSG list. If the CSG ID and associated PLMN is not in the UE's Allowed CSG list, the UE shall add the CSG ID and associated PLMN to its Allowed CSG list. Manual CSG selection is not supported when an emergency service has been initiated.
   NOTE 13: If the UE receives an Attach Accept message via a hybrid cell, the UE does not add the corresponding CSG ID and associated PLMN to its Allowed CSG list. Adding a CSG ID and associated PLMN to the UE's local Allowed CSG list for a hybrid cell is performed only by OTA or OMA DM procedures.
   When receiving the Attach Accept message the UE shall set its TIN to "GUTI" as no ISR Activated is indicated.
   If the UE receives an IPv4 address set to 0.0.0.0, it may negotiate the IPv4 address with DHCPv4 as specified in TS 29.061 [38]. If the UE receives an IPv6 interface identifier, it may wait for the Router Advertisement from the network with the IPv6 prefix information or it may send a Router Solicitation if necessary.
   NOTE 14: The IP address allocation details are described in clause 5.3.1 on "IP Address Allocation".
   If Control Plane CloT EPS Optimisation applies or the UE has not included the ESM message container in the Attach Request in step 1, then the steps 19 and 20 are not executed.
19. The UE sends the RRC Connection Reconfiguration Complete message to the eNodeB. For further details, see TS 36.331 [37].
20. The eNodeB sends the Initial Context Response message to the new MME. This Initial Context Response message includes the TEID of the eNodeB and the address of the eNodeB used for downlink traffic on the S1_U reference point.
   The MME shall be prepared to receive this message either before or after the Attach Complete message (sent in step 22).
   If the Correlation ID or SIPTO Correlation ID was included in the Initial Context Setup Request message, the eNodeB shall use the included information to establish direct user plane path with the L-GW and forward uplink data for Local IP Access or SIPTO at the Local Network with L-GW function collocated with the (H)eNB accordingly.
21. The UE sends a Direct Transfer message to the eNodeB, which includes the Attach Complete (EPS Bearer Identity, NAS sequence number, NAS-MAC) message. If the UE omitted the ESM message container from the Attach Request message in step 1, then the EPS Bearer Identity is omitted from the Attach Complete message.
22. The eNodeB forwards the Attach Complete message to the new MME in an Uplink NAS Transport message.
   If the ESM message container was included in step 1, after the Attach Accept message and once the UE has obtained (if applicable to the PDN type) a PDN Address, the UE can then send uplink packets towards the eNodeB which will then be tunnelled to the Serving GW and PDN GW. If Control Plane CloT EPS optimisations apply, UL data is sent as specified in clause 5.3.4B. If the UE requested for a dual address PDN type (IPv4v6) to a given APN and was granted a single address PDN type (IPv4 or IPv6) by the network with a reason cause indicating that only single IP version per PDN connection is allowed sent together with the PDN type, the UE should request for the activation of a parallel PDN connection to the same APN with a single address PDN type (IPv4 or IPv6) other than the one already activated. If the UE receives no reason cause in step 18 in response to an IPv4v6 PDN type and it receives an IPv6 Interface Identifier apart from the IPv4 address or 0.0.0.0 in the PDN Address field, it considers that the request for a dual address PDN was successful. It can wait for the Router Advertisement from the network with the IPv6 prefix information or it may send Router Solicitation if necessary.
23. Upon reception of both, the Initial Context Response message in step 20 and the Attach Complete message in step 22, the new MME sends a Modify Bearer Request (EPS Bearer Identity, eNodeB address, eNodeB TEID, Handover Indication, Presence Reporting Area Information) message to the Serving GW. If the Control Plane CloT EPS optimisation applies and the PDN connection is not served by a SCEF and if the MME does not need to report a change of UE presence in Presence Reporting Area, sending of Modify Bearer Request and steps 23a, 23b and 24 are skipped; otherwise if the PDN connection is served by SCEF, steps 23,24, 25, and 26 are not executed. If the MME has been requested to report a change of UE presence in Presence Reporting Area, the MME includes in this message the Presence Reporting Area Information comprising the area identifier and an indication on whether the UE is inside or outside the area.
23a. If the Handover Indication is included in step 23, the Serving GW sends a Modify Bearer Request (Handover Indication) message to the PDN GW to prompt the PDN GW to tunnel packets from non 3GPP IP access to 3GPP access system and immediately start routing packets to the Serving GW for the default and any dedicated EPS bearers established. If Presence Reporting Area Information is included in step 23, the Serving GW sends a Modify Bearer Request (Presence Reporting Area Information) message to the PDN GW.
   NOTE 15: The PDN GW is expected to handle the uplink packets sent by the UE via 3GPP access after step 22, even if they arrive before path switch in step 23. NOTE 16: The PDN GW forwards the Presence Reporting Area Information to the PCRF, to the OCS or to both as defined in TS 23.203 [6].
23b. The PDN GW acknowledges by sending Modify Bearer Response to the Serving GW.
24. The Serving GW acknowledges by sending Modify Bearer Response (EPS Bearer Identity) message to the new MME. The Serving GW can then send its buffered downlink packets.
   If there is a "Availability after DDN Failure" monitoring event or a "UE Reachability" monitoring event configured for the UE in the EMM Context of the MME, the MME sends an event notification (see TS 23.682 [74] for further information).
25. After the MME receives Modify Bearer Response (EPS Bearer Identity) message, if Request Type does not indicate handover and an EPS bearer was established and the subscription data indicates that the user is allowed to perform handover to non-3GPP accesses, and if the MME selected a PDN GW that is different from the PDN GW identity which was indicated by the HSS in the PDN subscription context, the MME shall send a Notify Request including the APN and PDN GW identity to the HSS for mobility with non-3GPP accesses. The message shall include information that identifies the PLMN in which the PDN GW is located.
   If the ME identity of the UE has changed and step 8 has not been performed, the MME sends a Notify Request (ME Identity) message to inform the HSS of the updated ME identity.
   For an Emergency Attach the MME shall not send any Notify Request to an HSS.
   After step 8, and in parallel to any of the preceding steps, the MME shall send a Notify Request (Homogeneous Support of IMS Voice over PS Sessions) message to the HSS:
   - If the MME has evaluated the support of IMS Voice over PS Sessions, see clause 4.3.5.8, and
   - If the MME determines that it needs to update the Homogeneous Support of IMS Voice over PS Sessions, see clause 4.3.5.8A.
26. The HSS stores the APN and PDN GW identity pair and sends a Notify Response to the MME.

NOTE 17: For handover from non-3GPP access, the PDN GW initiates resource allocation deactivation procedure in the trusted/untrusted non-3GPP IP access as specified in TS 23.402 [2]."

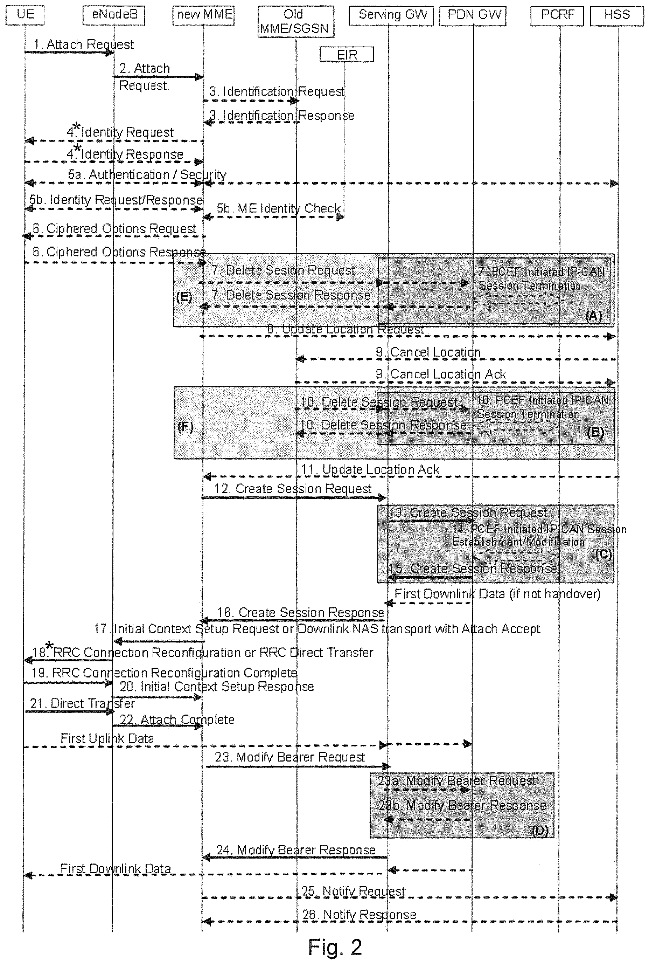

The embodiment according to Fig. 2 shows in a schematic diagram the entities of a communication system and the information flows between these when providing information to a mobile device operated in a mobile radio network according to a method according to the present invention. Compared to Fig. 1, which is known from ETSI TS 123 401 V13.8.0 (2016-10), "LTE; General Packet Radio Service (GPRS) enhancements for Evolved Universal Terrestrial Radio Access Network (E-UTRAN) access (3GPP TS 23.401 version 13.8.0 Release 13)", Step 4* of Fig. 2 is modified (compared to Step 4 of Fig. 1) and used according to the present invention to protect system information by using the specific key, preferably the MAC, as content within the system information block SIB sent from the mobile radio network to the mobile device UE with a SIB message. The specific key will be send within the respectively modified (compared to Step 18 of Fig. 1) Step 18* (RRC Reconfiguration compete).

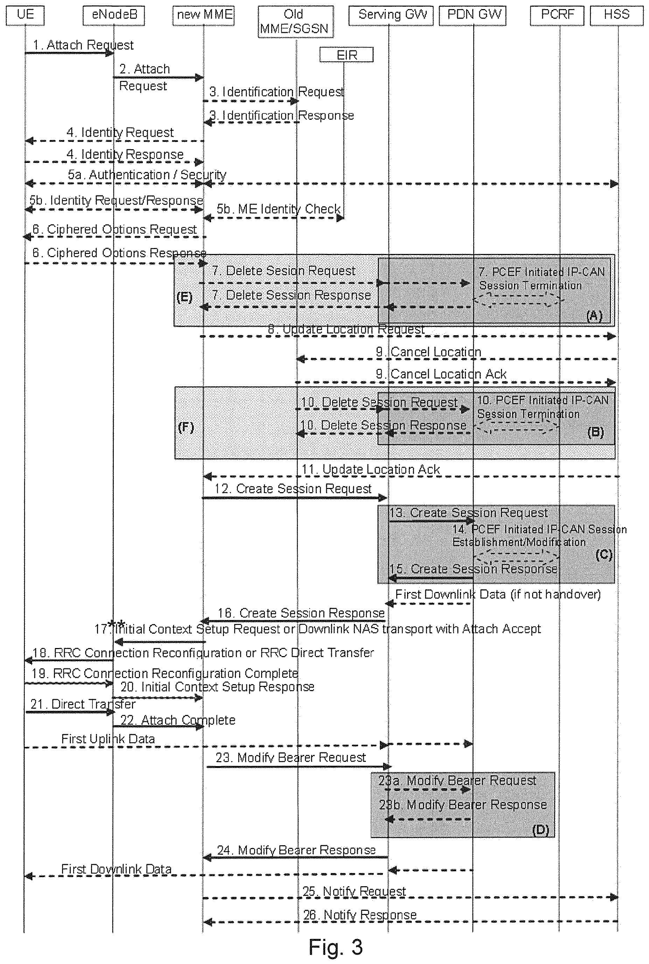

The embodiment according to Fig. 3 shows in a schematic diagram the entities of a communication system and the information flows between these when providing information to a mobile device operated in a mobile radio network according to a method according to the present invention. Compared to Fig. 1, which is known from ETSI TS 123 401 V13.8.0 (2016-10), "LTE; General Packet Radio Service (GPRS) enhancements for Evolved Universal Terrestrial Radio Access Network (E-UTRAN) access (3GPP TS 23.401 version 13.8.0 Release 13)", Step 17** of Fig. 3 is modified (compared to Step 17 of Fig. 1) and used according to the present invention to provide/deliver the mobile device with the specific key, preferably the MAC. The specific key advantageously will be sent within Attach Accept.

A further embodiment of the present invention - not shown in the figures - suggests to use an application server over the top to provide/deliver the mobile device with the specific key, preferably the MAC. This advantageously allows to make implementations of the solutions according to the present invention independent of the mobile core network.

The exemplary embodiments of the invention represented in the figures and described in connection with these only serve for explaining of the invention and are not limiting for the invention.

## Claims

1. A method performed by a mobile radio network for providing information to a mobile device operated in the mobile radio network forming a service area having a cellular network structure composed of radio cells,
whereby
an information item to be provided to the mobile device for reproduction and/or usage by the mobile device for a further service and/or an application operated on side of the mobile device is encoded with a key on side of the mobile radio network,
the encoded information item is transmitted from the mobile radio network to the mobile device via a broadcast channel used within at least one radio cell of the mobile radio network,
the information item received by the mobile device from the radio cell of the mobile radio network via the broadcast channel is decoded on side of the mobile device by using the key,
**characterized in that**
the key is provided to the mobile device from the mobile radio network when the mobile device connects a radio cell of the mobile radio network for the first time,
wherein the information item is or comprises positioning technology assistance information, and
wherein the mobile radio network is a mobile radio network according to 4G standard respectively LTE standard and the information item is broadcasted to the mobile device via a SIB Message.

2. A method according to claim 1, **characterized in that** the key is provided to the mobile device from the mobile radio network during attach procedure.

3. A method according to claim 1 or claim 2, **characterized in that** the key provided to the mobile device from the mobile radio network depends on the subscription the user of the mobile device has with the mobile radio network.

4. A method according to one or more of the claims 1 to 3, **characterized in that** the key is used as content within a system information block, SIB, sent from the mobile radio network to the mobile device with a SIB message.

5. A method according to one or more of the claims 1 to 4, **characterized in that** the key is a message authentication code.

6. A method according to one or more of the claims 1 to 5, **characterized in that** the key is transmitted from or via the NodeB responsible for the radio cell of the mobile radio network to the mobile device.

7. A method according to one or more of the claims 1 to 6, **characterized in that** the positioning technology assistance information is a global cell ID of the current radio cell, cell antenna position of the radio cell, global navigation satellite system, GNSS, based measurement of the current position of the antenna position of the radio cell and/or vector at cell antenna position of the radio cell, GNSS ephemerides received from satellites relating to the radio cell together with actual GNSS Almanac including validity area indication of the radio cell, GNSS Doppler shift, GNSS correction data from services like European Geostationary Navigation Overlay Service, EGNOS, and/or Satellitenpositionierungsdienst der deutschen Landesvermessung, SAPOS, Mobile Radio Network propagation channel, model and/or characteristics to be applied for the radio cell for broadcasting, and/or eNodeB specific system data.

8. A method according to one or more of the claims 1 to 7, **characterized in that** the positioning technology assistance information is integrity protected in dependence of the subscription the user of the mobile device has with the mobile radio network.

9. A method according to one or more of the claims 1 to 8, **characterized in that** the information item is broadcasted to the mobile device via Multimedia Broadcast Multicast Service, MBMS, and/or evolved MBMS, eMBMS.

10. A communication system comprising a mobile radio network and a mobile device for providing information to the mobile device operated in the mobile radio network forming a service area having a cellular network structure composed of radio cells, whereby the mobile radio network and the mobile device are designed and/or adapted to execute the steps of a method according to one or more of the claims 1 to 9.

11. A mobile radio network forming a service area having a cellular network structure composed of radio cells for providing information to a mobile device operated in the mobile radio network, wherein the mobile radio network is designed and/or adapted to
- provide an information item to the mobile device for reproduction and/or usage by the mobile device for a further service and/or an application operated on side of the mobile device, wherein the information item is encoded with a key on side of the mobile radio network, and
- transmit the encoded information item from the mobile radio network to the mobile device via a broadcast channel used within at least one radio cell of the mobile radio network,
**characterized in that**
the mobile radio network is designed and/or adapted to provide the key to the mobile device when the mobile device connects to a radio cell of the mobile radio network for the first time,
the information item is or comprises positioning technology assistance information, and
the mobile radio network is a mobile radio network according to 4G standard respectively LTE standard and the information item is broadcasted to the mobile device via a SIB Message.

12. A mobile device operated respectively operate-able in a mobile radio network forming a service area having a cellular network structure composed of radio cells for providing information from the mobile radio network to the mobile device, wherein the mobile device is designed and/or adapted to
- receive an information item from a radio cell of the mobile radio network via a broadcast channel, and
- decode the information item on side of the mobile device by using a key,
**characterized in that**
the mobile device is designed and/or adapted to receive the key from the mobile radio network when the mobile device connects to a radio cell of the mobile radio network for the first time,
the information item is or comprises positioning technology assistance information, and
the mobile radio network is a mobile radio network according to 4G standard respectively LTE standard and the information item is broadcasted to the mobile device via a SIB Message.

## Patentansprüche

1. Verfahren, durchgeführt von einem einen Versorgungsbereich mit einer aus Funkzellen bestehenden zellularen Netzstruktur bildenden Mobilfunknetz, zur Bereitstellung von Informationen an ein in dem Mobilfunknetz betriebenen Mobilgerät,
wobei
eine an das Mobilgerät bereitgestellte Information zur Wiedergabe und/oder zur Nutzung durch das Mobilgerät für einen weiteren Dienst und/oder eine seitens des Mobilgerätes betriebene Anwendung mit einer Verschlüsselung seitens des Mobilfunknetzes codiert wird,
die codierte Information von dem Mobilfunknetz an das Mobilgerät über einen innerhalb zumindest einer Funkzelle des Mobilfunknetzes genutzten Broadcast-Kanals übertragen wird,
die von der Funkzelle des Mobilfunknetzes über den Broadcast-Kanal von dem Mobilgerät empfangene Information seitens des Mobilgerätes unter Nutzung des Schlüssels decodiert wird,
**dadurch gekennzeichnet, dass**
der Schlüssel dem Mobilgerät von dem Mobilfunknetz zur Verfügung gestellt wird, wenn sich das Mobilgerät zum ersten Mal mit einer Funkzelle des Mobilfunknetzes verbindet,
wobei die Information eine Unterstützungsinformation zur Positionstechnologie ist oder aufweist, und
wobei das Mobilfunknetz ein Mobilfunknetz gemäß dem 4G-Standard bzw. dem LTE-Standard ist und die Information an das Mobilgerät per Broadcast mittels SIB-Nachricht übertragen wird.

2. Verfahren gemäß Anspruch 1, **dadurch gekennzeichnet, dass** der Schlüssel dem Mobilgerät von dem Mobilfunknetz während des Verbindungsverfahrens zur Verfügung gestellt wird.

3. Verfahren gemäß Anspruch 1 oder Anspruch 2, **dadurch gekennzeichnet, dass** der dem Mobilgerät von dem Mobilfunknetz zur Verfügung gestellte Schlüssel von dem Abonnement des Nutzers des Mobilgerätes, das er mit dem Mobilfunknetz besitzt, abhängt.

4. Verfahren gemäß einem der Ansprüche 1 bis 3, **dadurch gekennzeichnet, dass** der Schlüssel als Inhalt innerhalb eines Systeminformationsblocks, SIB, genutzt wird, der von dem Mobilfunknetz an das Mobilgerät mit einer SIB-Nachricht gesendet wird.

5. Verfahren gemäß einem der Ansprüche 1 bis 4, **dadurch gekennzeichnet, dass** der Schlüssel ein Nachrichtenauthentifizierungscode ist.

6. Verfahren gemäß einem der Ansprüche 1 bis 5, **dadurch gekennzeichnet, dass** der Schlüssel von oder über die für die Funkzelle des Mobilfunknetzes verantwortliche NodeB-Basisstation an das Mobilgerät übermittelt wird.

7. Verfahren gemäß einem der Ansprüche 1 bis 6, **dadurch gekennzeichnet, dass** die Unterstützungsinformation zur Positionstechnologie eine globale Zell-ID der aktuellen Funkzelle, eine Zellantennenposition der Funkzelle, eine auf dem globalen Navigationssatellitensystem, GNSS, basierende Messung der aktuellen Position der Antennenposition der Funkzelle und/oder des Vektors an der Zellantennenposition der Funkzelle, von den Satelliten bezüglich der Funkzelle empfangene GNSS-Ephemeriden zusammen mit dem aktuellen GNSS-Almanach einschließlich der Gültigkeitsbereichsangabe der Funkzelle, die GNSS-Dopplerverschiebung, GNSS-Korrekturdaten von Diensten wie dem European Geostationary Navigation Overlay Service, EGNOS, und/oder dem Satellitenpositionierungsdienst der deutschen Landesvermessung, SAPOS, ein auf die Funkzelle anzuwendender Mobilfunknetzübertragungskanal, -modell und/oder -eigenschaften zur Broadcast-Übertragung und/oder eNodeB-spezifische Systemdaten ist/sind.

8. Verfahren gemäß einem der Ansprüche 1 bis 7, **dadurch gekennzeichnet, dass** die Unterstützungsinformation zur Positionstechnologie abhängig von dem Abonnement, das der Nutzer des Mobilgerätes mit dem Mobilfunknetz hat, integritätsgeschützt ist.

9. Verfahren gemäß einem oder mehreren der Ansprüche 1 bis 8, **dadurch gekennzeichnet, dass** die Information an das Mobilgerät über den Multimedia Broadcast Multicast Service, MBMS, und/oder den evolved MBMS, eMBMS, gesendet wird.

10. Kommunikationssystem mit einem einen Versorgungsbereich mit einer aus Funkzellen bestehenden zellularen Netzstruktur bildenden Mobilfunknetz und einem Mobilgerät, zur Bereitstellung von Informationen an ein in dem Mobilfunknetz betriebenes Mobilgerät, wobei das Mobilfunknetz und das Mobilgerät dazu ausgebildet und/oder eingerichtet sind, die Schritte des Verfahrens gemäß einem oder mehreren der Ansprüche 1 bis 9 auszuführen.

11. Mobilfunknetz, das einen Versorgungsbereich mit einer aus Funkzellen bestehenden zellularen Netzstruktur bildet, um Informationen an ein in dem Mobilfunknetz betriebenes Mobilgerät bereitzustellen, wobei das Mobilfunknetz dazu ausgebildet und/oder eingerichtet ist
- eine Information an das Mobilgerät bereitzustellen zur Wiedergabe und/oder zur Nutzung durch das Mobilgerät für einen weiteren Dienst und/oder eine seitens des Mobilgerätes betriebene Anwendung, wobei die Information mit einem Schlüssel seitens des Mobilfunknetzes codiert wird, und
- die codierte Information von dem Mobilfunknetz an das Mobilgerät über einen innerhalb zumindest einer Funkzelle des Mobilfunknetzes genutzten Übertragungskanals zu per Broadcast übertragen,
**dadurch gekennzeichnet, dass**
das Mobilfunknetz dazu ausgebildet und/oder eingerichtet ist, den Schlüssel dem Mobilgerät zur Verfügung zu stellen, wenn sich das Mobilgerät zum ersten Mal mit einer Funkzelle des Mobilfunknetzes verbindet,
die Information eine Unterstützungsinformation zur Positionstechnologie ist oder aufweist, und
das Mobilfunknetz ein Mobilfunknetz gemäß dem 4G-Standard bzw. dem LTE-Standard ist und die Information an das Mobilgerät per Broadcast mittels SIB-Nachricht übertragen wird.

12. Mobilgerät, das in einem einen Versorgungsbereich mit einer aus Funkzellen bestehenden zellularen Netzstruktur bildenden Mobilfunknetz betrieben wird bzw. betreibbar ist, zur Bereitstellung von Informationen von dem Mobilfunknetz an das Mobilgerät, wobei das Mobilgerät dazu ausgebildet und/oder eingerichtet ist,
- eine Information von einer Funkzelle des Mobilfunknetzes mittels Broadcast-Kanal zu empfangen, und
- die Information seitens des Mobilgerätes unter Verwendung eines Schlüssels zu decodieren,
**dadurch gekennzeichnet, dass**
das Mobilgerät dazu ausgebildet und/oder eingerichtet ist, den Schlüssel von dem Mobilfunknetz zu empfangen, wenn sich das Mobilgerät zum ersten Mal mit einer Funkzelle des Mobilfunknetzes verbindet,
die Information eine Unterstützungsinformation zur Positionstechnologie ist oder aufweist, und
das Mobilfunknetz ein Mobilfunknetz gemäß dem 4G-Standard bzw. dem LTE-Standard ist und die Information an das Mobilgerät per Broadcast mittels SIB-Nachricht übertragen wird.

## Revendications

1. Procédé effectué par un réseau radio mobile pour fournir des informations à un dispositif mobile fonctionnant dans le réseau radio mobile, qui forme une zone de service ayant une structure de réseau cellulaire composée de cellules radio,
dans lequel
une information à fournir au dispositif mobile pour la reproduction et/ou l'utilisation par le dispositif mobile pour un autre service et/ou une application effectuée par le dispositif mobile est codée avec une clé par moyen du réseau radio mobile,
l'information codée est transmise du réseau radio mobile au dispositif mobile via un canal de diffusion utilisé à l'intérieur d'au moins une cellule radio du réseau radio mobile,
l'information reçue par le dispositif mobile à partir de la cellule radio du réseau radio mobile via le canal de diffusion est décodée par le dispositif mobile en utilisant la clé,
**caractérisé en ce que**
la clé est fournie par le réseau radio mobile au dispositif mobile, quand le dispositif mobile se raccorde pour la première fois à la cellule radio du réseau radio mobile,
dans lequel l'information est ou comprend une information d'assistance de technologie de positionnement, et
dans lequel le réseau radio mobile est un réseau radio mobile selon le standard 4G ou le standard LTE et l'information est transmise au dispositif mobile via un message SIB.

2. Procédé selon la revendication 1, **caractérisé en ce que** la clé est fournie du réseau radio mobile au dispositif mobile pendant la procédure de connexion.

3. Procédé selon la revendication 1 ou la revendication 2, **caractérisé en ce que** la clé fournie du réseau radio mobile au dispositif mobile dépend de l'abonnement, que l'utilisateur du dispositif mobile possède avec le réseau radio mobile.

4. Procédé selon l'une des revendications 1 à 3, **caractérisé en ce que** la clé est utilisée comme le contenu dans un bloc d'informations système, SIB, envoyé du réseau radio mobile au dispositif mobile avec un message SIB.

5. Procédé selon l'une des revendications 1 à 4, **caractérisé en ce que** la clé est un code d'authentification de message.

6. Procédé selon l'une des revendications 1 à 5, **caractérisé en ce que** la clé est transmise à partir du ou via le nœud B responsable pour la cellule radio du réseau radio mobile au dispositif mobile.

7. Procédé selon l'une des revendications 1 à 6, **caractérisé en ce que** l'information d'assistance de technologie de positionnement est un identifiant de cellule globale de la cellule radio actuelle, la position d'antenne de cellule de la cellule radio, la mesure fondée sur le système mondial de navigation par satellite, GNSS, de la position actuelle de la position d'antenne de la cellule radio et/ou du vecteur à la position d'antenne de cellule de la cellule radio, des éphémérides de GNSS reçues par des satellites par rapport à la cellule radio ensemble avec l'almanach GNSS actuel comprenant l'indication de la zone de validité de la cellule radio, le décalage Doppler de GNSS, des données de correction de GNSS des services tels que le Service Européen de Navigation par Recouvrement Géostationnaire, EGNOS, et/ou le Service de Positionnement par Satellite de l'arpentage allemand, SAPOS, le canal de diffusion, le modèle et/ou les caractéristiques du réseau radio mobile à appliquer pour la cellule radio pour la transmission et/ou des données de système spécifiques du nœud électronique B.

8. Procédé selon l'une des revendications 1 à 7, **caractérisé en ce que** l'information d'assistance de technologie de positionnement a une intégrité protégée en fonction de d'abonnement, que l'utilisateur du dispositif mobile possède avec le réseau radio mobile.

9. Procédé selon l'une des revendications 1 à 8, **caractérisé en ce que** l'information est transmise au dispositif mobile via le Service de Multidiffusion de Multimédia, MBMS, et/ou le Service de Multidiffusion de Multimédia évolué, eMBMS.

10. Système de communication comprenant un réseau radio mobile et un dispositif mobile pour fournir des informations au dispositif mobile fonctionnant dans le réseau radio mobile, qui forme une zone de service ayant une structure de réseau cellulaire composée de cellules radio, dans lequel le réseau radio mobile et le dispositif mobile sont configurés pour et/ou adaptés à effectuer les étapes d'un procédé selon l'une des revendications 1 à 9.

11. Réseau radio mobile, qui forme une zone de service ayant une structure de réseau cellulaire composée de cellules radio pour fournir des informations à un dispositif mobile fonctionnant dans le réseau radio mobile, dans lequel le réseau radio mobile est configuré pour et/ou adapté à
- fournir une information au dispositif mobile pour la reproduction et/ou l'utilisation par le dispositif mobile pour un autre service et/ou une application effectuée par le dispositif mobile, dans lequel l'information est codée avec une clé par moyen du réseau radio mobile, et
- transmettre l'information codée du réseau radio mobile au dispositif mobile via un canal de diffusion utilisé à l'intérieur d'au moins une cellule radio du réseau radio mobile,
**caractérisé en ce que**
le réseau radio mobile est configuré pour et/ou adapté à fournir la clé au dispositif mobile, quand le dispositif mobile se raccorde pour la première fois à une cellule radio du réseau radio mobile,
dans lequel l'information est ou comprend une information d'assistance de technologie de positionnement, et
dans lequel le réseau radio mobile est un réseau radio mobile selon le standard 4G ou le standard LTE et l'information est transmise au dispositif mobile via un message SIB.

12. Dispositif mobile fonctionnant et ou pouvant fonctionner dans un réseau radio mobile, qui forme une zone de service ayant une structure de réseau cellulaire composée de cellules radio pour fournir des informations du réseau radio mobile au dispositif mobile, dans lequel le dispositif mobile est configuré pour et/ou adapté à
- recevoir une information d'une cellule radio du réseau radio mobile via un canal de diffusion, et
- décoder l'information par le dispositif mobile en utilisant une clé,
**caractérisé en ce que**
le dispositif mobile est configuré pour et/ou adapté à recevoir la clé du réseau radio mobile, quand le dispositif mobile se raccorde pour la première fois à une cellule radio du réseau radio mobile,
l'information est ou comprend une information d'assistance de technologie de positionnement, et
le réseau radio mobile est un réseau radio mobile selon le standard 4G ou le standard LTE et l'information est transmise au dispositif mobile via un message SIB.
